(19) Europäisches Patentamt
European Patent Office
Office européen des brevets

(11) **EP 2 438 461 B1**

(12) **FASCICULE DE BREVET EUROPEEN**

(45) Date de publication et mention
de la délivrance du brevet:
**01.01.2014 Bulletin 2014/01**

(51) Int Cl.:
***G01S 13/78*** *(2006.01)*      ***G01S 13/76*** *(2006.01)*

(21) Numéro de dépôt: **10714278.8**

(86) Numéro de dépôt international:
**PCT/EP2010/055118**

(22) Date de dépôt: **19.04.2010**

(87) Numéro de publication internationale:
**WO 2010/139502 (09.12.2010 Gazette 2010/49)**

(54) **PROCÉDÉ DE DÉTECTION D'UN MESSAGE ÉMIS PAR UN INTERROGATEUR OU UN RÉPONDEUR EN MODE S**

VERFAHREN ZUM DETEKTIEREN EINER NACHRICHT, DIE DURCH EINEN INTERROGATOR ODER EINEN TRANSPONDER IM MODUS S GESENDET WIRD

METHOD FOR DETECTING A MESSAGE TRANSMITTED BY AN INTERROGATOR OR A TRANSPONDER IN MODE S

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **03.06.2009 FR 0902674**

(43) Date de publication de la demande:
**11.04.2012 Bulletin 2012/15**

(73) Titulaire: **THALES**
**92200 Neuilly-sur-Seine (FR)**

(72) Inventeurs:
• **ROBIN, Dominique**
**F-53005 Laval (FR)**
• **PROVOST, Claude**
**F-53005 Laval (FR)**
• **BELMON, Laurent**
**F-92704 Colombes (FR)**

(74) Mandataire: **Labatte, Laurent**
**Marks & Clerk France**
**Immeuble Visium**
**22, avenue Aristide Briand**
**94117 Arcueil Cedex (FR)**

(56) Documents cités:
WO-A-2005/085898      FR-A- 2 632 421
US-A- 5 089 822      US-B1- 6 768 445

**Description**

La présente invention concerne un procédé de détection d'un message émis par un interrogateur ou un répondeur en mode S. L'invention s'applique notamment au décodage de messages d'interrogation portés par des signaux de faible puissance.

Les aéroports sont généralement équipés de radars secondaires pour interroger les aéronefs évoluant dans leur proximité. Les aéronefs traitent les messages interrogations émis à partir du sol grâce à des répondeurs embarqués. Classiquement, les radars secondaires sont équipés d'antennes directives pointées en direction des aéronefs à interroger, de manière à concentrer la puissance des signaux porteurs des messages d'interrogation et à faciliter ainsi leur traitement à bord.

Un problème de décodage des messages d'interrogation se pose lorsque l'on souhaite réduire la puissance des signaux émis par les radars secondaires ou que l'on tente de décoder ces signaux à une distance plus élevée que la distance initialement prévue. Par exemple, il peut être souhaitable d'élargir la zone couverte par un radar au sol sans augmenter la puissance des signaux émis ; on peut également souhaiter émettre des messages d'interrogation à partir du sol avec une antenne omnidirectionnelle vers un aéronef. La puissance reçue par le répondeur est alors insuffisante pour pouvoir décoder les messages avec les équipements actuels.

Pour compenser les pertes en bilan de liaison entre l'interrogateur et le répondeur, il est possible d'augmenter la puissance de l'interrogateur. Cette solution est toutefois rarement applicable pour des raisons de contraintes opérationnelles et/ou de coût d'installation, car elle nécessite des modifications matérielles importantes.

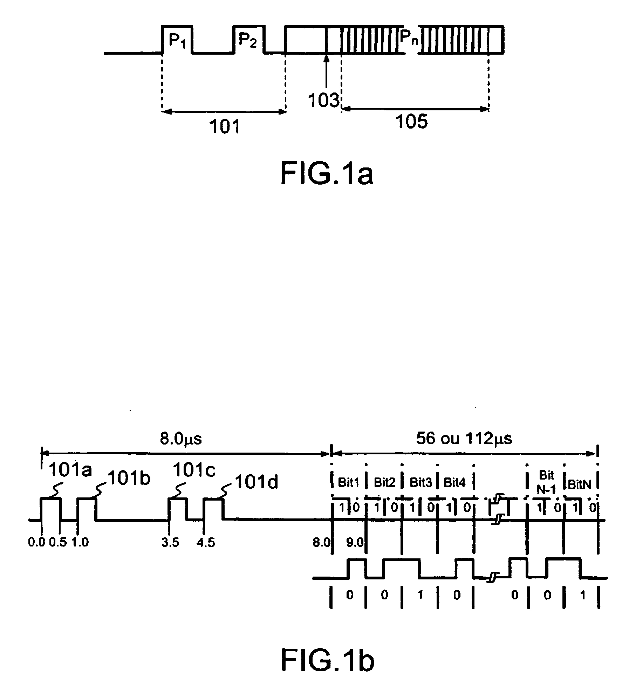

Parmi les formats de messages d'interrogation existants, le mode S est plus particulièrement concerné, car il s'agit d'un mode sélectif d'interrogation largement utilisé dans l'aviation civile. Un message au format mode S, représenté en figure 1, comprend un préambule 101 suivi par une inversion de phase 103 et des données 105 transmises par modulation de phase différentielle, laquelle modulation sera désignée dans la suite du document, par le sigle anglo-saxon DPSK signifiant « Differential Phase Shift Keying ». Le préambule 101 comprend deux impulsions 111, 112 séparées temporellement par une durée connue.

Un brevet américain publié sous la référence US5089822 présente une méthode de détection du préambule d'un message d'interrogation en mode S effectuant une comparaison entre un motif attendu de deux impulsions avec un seuillage du signal reçu. Cependant, l'utilisation de cette méthode conduit à de nombreuses fausses détections lorsque le niveau signal à bruit du signal reçu est faible. Ce même brevet US5089822 propose de détecter l'inversion de phase 103. Toutefois, cette simple détection d'inversion de phase peut se révéler imprécise pour une synchronisation temporelle servant à effectuer un décodage correct des données 105.

Un but de l'invention est notamment d'améliorer la sensibilité des répondeurs pour le décodage des interrogations en mode S sans modification matérielle de ces répondeurs. A cet effet, l'invention a pour objet un procédé de détection d'un message pourvu d'un préambule à plusieurs impulsions dans un signal radiofréquences émis par un interrogateur ou un répondeur en mode S, ledit procédé exécutant une étape de décomposition dudit signal en un signal d'amplitude et en un signal de phase complexe, ledit procédé exécutant une étape de détection dudit préambule en corrélant le signal d'amplitude avec un signal de réplique des impulsions attendues, ledit procédé étant caractérisé en ce qu'il exécute une étape de contrôle de phase permettant de déterminer si l'évolution de la phase du signal radiofréquences (201) est cohérente avec celle qui est attendue pour un préambule de message en mode S en sommant des échantillons dudit signal de phase pendant la durée d'écoulement des impulsions dudit préambule et, par exemple, en comparant la somme obtenue à un seuil en exploitant les échantillons, de manière à déterminer si le signal de phase est un signal sinusoïdal.

Le procédé selon l'invention permet de contrôler la cohérence de la phase sur les impulsions non modulées d'un signal détecté après une première phase de détection par corrélation, afin de vérifier que la phase de ce signal détecté possède bien les caractéristiques linéaires d'un signal sinusoïdal, pour les systèmes IFF de 1030MHz ou 1090 MHz, et non celles aléatoires d'un bruit thermique présent avant le signal, entre les impulsions du signal, et après les impulsions du signal.

L'association entre l'étape de corrélation et l'étape de contrôle de phase permet notamment de réduire la puissance d'émission des systèmes d'interrogation, et donc de réduire la taille et la consommation d'énergie du système d'interrogation, ce qui est particulièrement utile lorsque de tels systèmes sont embarqués dans des plates-formes de volume restreint et aux ressources limitées. Le procédé selon l'invention permet également de diminuer le nombre de fausses détections de préambules.

Selon un mode de mise en oeuvre du procédé selon l'invention, le préambule du message est suivi par un bloc de données codées par modulation de phase différentielle et le procédé comprend une étape de synchronisation temporelle par corrélation du signal de phase complexe avec une séquence de référence formée par un ou plusieurs bits connus avant le décodage des données.

En effet, si le préambule d'un message de mode S est détecté dans un signal dont le niveau de puissance est diminué par rapport à un signal classique, grâce au procédé selon l'invention, encore faut-il que la synchronisation temporelle sur ce signal de faible niveau soit correctement effectuée par la suite. Aussi, la séquence de référence est utilisée pour améliorer cette synchronisation, notamment pour permettre un décodage réussi des données qui suivent le préambule.

La séquence de référence peut comprendre au moins un bit d'inversion de phase et cinq bits identifiant le format du message de mode S. En outre, la séquence de référence peut comprendre des bits de données non consécutifs.

Selon un mode de réalisation du procédé selon l'invention, l'étape de contrôle de phase vérifie que la phase du signal reçu varie selon une sinusoïde en démodulant le signal de phase complexe en une composante réelle I et une composante imaginaire Q puis en comparant avec un seuil la somme de plusieurs échantillons prélevés pendant les impulsions sur chacune des composantes I, Q.

Selon un mode de réalisation du procédé selon l'invention, le message est un message d'interrogation en mode S et le signal de réplique corrélé avec le signal d'amplitude comprend deux impulsions, chacune de durée sensiblement égale à 0,8 $\mu$s, lesdites impulsions étant espacées temporellement par une durée de 2 $\mu$s.

Selon un mode de réalisation du procédé selon l'invention, le message est un message de réponse en mode S et le signal de réplique corrélé avec le signal d'amplitude comprend quatre impulsions, chacune de durée sensiblement égale à 0,5 $\mu$s.

Selon un mode de réalisation du procédé selon l'invention, l'étape de contrôle de phase n'est exécutée que si un préambule a été observé lors de l'étape de détection du préambule.

Selon un mode de réalisation du procédé selon l'invention, le niveau de seuil pour la détection du préambule est déterminé en fonction du niveau de bruit du signal et/ou de l'amplitude maximale du signal d'amplitude.

L'invention a également pour objet un répondeur comportant au moins une antenne et un module frontal radiofréquences, le répondeur comportant une unité de traitement de mise en oeuvre du procédé tel que décrit plus haut.

D'autres caractéristiques apparaîtront à la lecture de la description détaillée donnée à titre d'exemple et non limitative qui suit faite en regard de dessins annexés qui représentent :

- la figure 1a, un graphique représentant l'allure d'un message d'interrogation en mode S, cette figure ayant déjà été présentée plus haut ;
- la figure 1b, un graphique représentant l'allure d'un message de réponse en mode S ;
- la figure 2a, un synoptique illustrant les étapes d'un premier procédé selon l'invention ;
- la figure 2b, un synoptique illustrant les étapes d'un deuxième procédé selon l'invention ;
- la figure 3, un synoptique illustrant des étapes exécutées par le procédé selon l'invention pour détecter le préambule d'un message d'interrogation en mode S ;
- la figure 4, un graphique illustrant une première étape de détection du préambule par le procédé selon l'invention ;
- la figure 5, un synoptique illustrant les étapes effectuées pour contrôler la phase du signal dans la détection du préambule.

Dans un souci de clarté, les mêmes repères dans des figures différentes désignent les mêmes éléments.

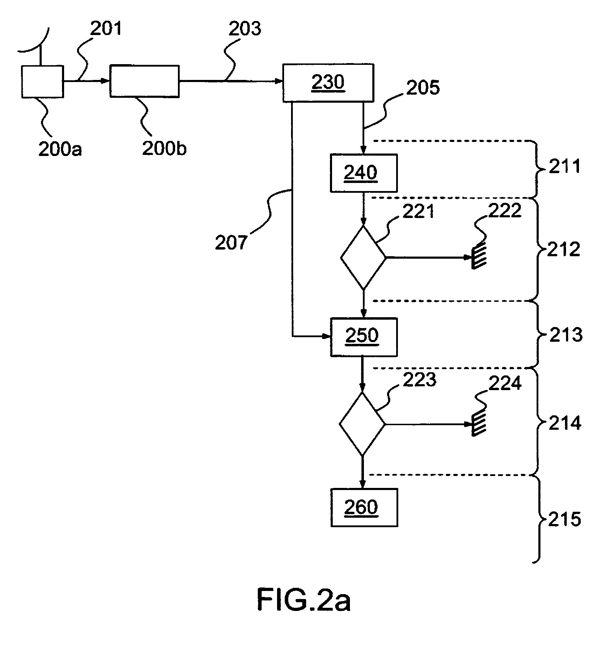

On se réfère maintenant à la figure 2a, laquelle présente un synoptique illustrant les étapes d'un premier procédé selon l'invention. On souhaite décoder les données d'un message d'interrogation du mode S porté par un signal radiofréquences 201 reçu, par exemple, par l'antenne 200a d'un répondeur. Le signal radiofréquence 201 est ramené en fréquence intermédiaire par un module frontal 200b, puis le signal en fréquence intermédiaire 203 est échantillonné et décomposé, par exemple par un amplificateur logarithmique 230, en deux signaux distincts 205, 207, le premier desquels 205 portant l'information d'amplitude, le second signal 207 portant l'information de phase. Le premier signal 205 est un signal numérique d'amplitude pouvant être exprimé sur une échelle logarithmique, ce premier signal 205 étant désigné ci-après par l'expression « signal vidéo » 205, le second signal étant un signal de phase 207 dont l'amplitude est unitaire, ce second signal étant désigné ci-après par l'expression « signal en fréquence intermédiaire ».

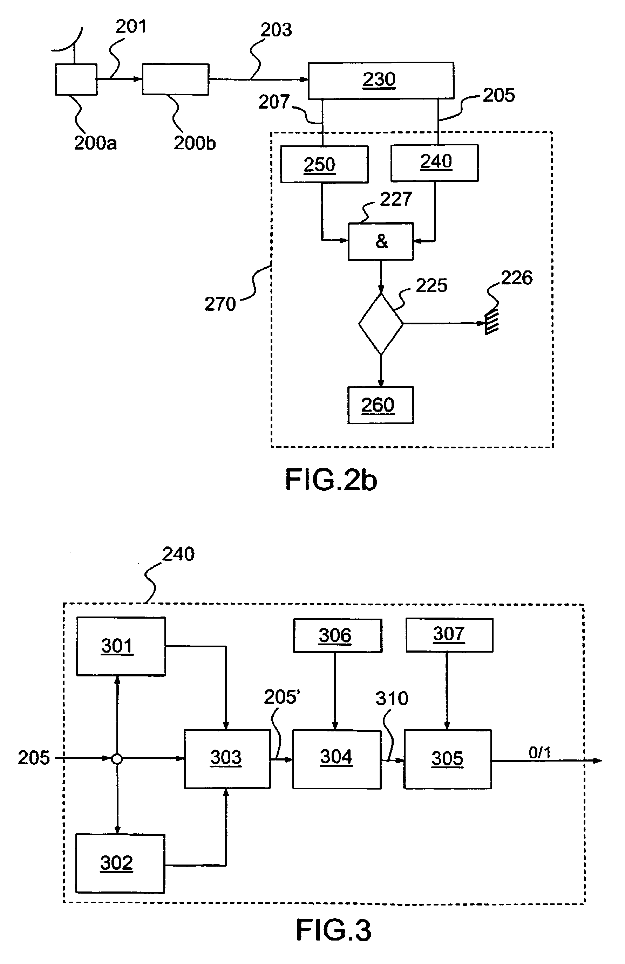

Lors d'une première étape 211, le signal vidéo 207 est analysé par un module 240 de détection du préambule du message de mode S. Cette première étape 211 est détaillée plus loin en figure 3.

Lors d'une deuxième étape 212, un test 221 est effectué pour savoir si un préambule a été détecté par le module de détection 240. Si aucun préambule n'est détecté, le signal n'est pas traité comme un message d'interrogation en mode S. Le procédé s'arrête 222.

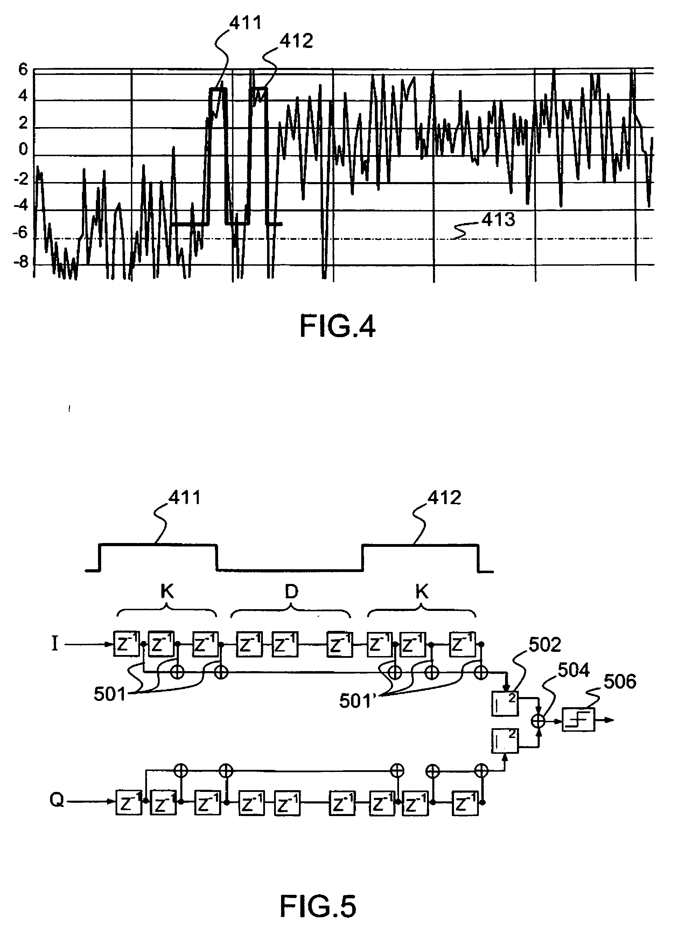

A contrario, si un préambule a été détecté par le module de détection 240, une troisième étape 213 de contrôle de phase est exécutée. A ce stade, le signal est détecté comme portant un message d'interrogation en mode S, mais il est néanmoins possible qu'il s'agisse d'une fausse détection. Lors de cette troisième étape 213, le signal est analysé par un module 250 de contrôle de phase permettant de déterminer si l'évolution de la phase du signal est cohérente avec celle qui est attendue pour un préambule de message en mode S. Contrairement à un procédé classique pour lequel une première étape de détection du préambule engendrerait de nombreuses fausses détections non corrigées à bas niveau de puissance, la troisième étape 213 de contrôle de phase telle qu'exécutée par le procédé selon l'invention permet d'éliminer les fausses détections générées lors de la première étape 211. La troisième étape 213 est détaillée plus loin en figure 5.

Lors d'une quatrième étape 214, un deuxième test 223 est exécuté pour déterminer si, compte tenu du résultat obtenu par le module 250 de contrôle de phase, le module 240 de détection du préambule avait effectué une fausse détection. Si tel est le cas, le procédé s'arrête 224.

Dans le cas contraire, c'est à dire si le deuxième test 223 indique que contrôle de phase a confirmé le fait que le signal traité était bien un signal portant un message d'interrogation en mode S, alors une cinquième étape 215 de décodage des données du message est effectué par un module 260 approprié.

Le procédé selon l'invention peut être adapté à la détection du préambule d'un message de réponse en mode S, ce type de message comportant quatre impulsions 101a, 101 b, 101c, 101d, comme illustré dans la figure 1b. Sans sortir du cadre de l'invention, le procédé est applicable à des messages comportant un nombre différent d'impulsions.

La figure 2b présente un synoptique illustrant les étapes d'un deuxième procédé selon l'invention. Selon le mode de mise en oeuvre présenté dans cette figure, la détection du préambule 240 et le contrôle de phase 250 sont exécutés en parallèle. Le résultat de la détection 240 et du contrôle de phase 250 sont combinés 227 et testés 225. Ce test 225 conduit à l'arrêt 226 du procédé si la détection du préambule 240 et/ou le contrôle de phase 250 n'indique pas l'observation d'un préambule. Dans le cas contraire, le décodage des données du message est effectué par un module 260 approprié. Les étapes du procédé selon l'invention peuvent être exécutées par une unité de traitement 270, par exemple un circuit programmable ou un microprocesseur exécutant un module logiciel.

La figure 3 illustre, à travers un synoptique, des étapes exécutées par le procédé selon l'invention pour détecter le préambule d'un message d'interrogation en mode S.

Le signal vidéo 205 est transmis vers un module 301 d'estimation du niveau de bruit et vers un module 302 d'estimation de l'amplitude maximale du signal vidéo 205. Le signal vidéo 205 est ensuite traité par un module 303 de normalisation, le facteur de normalisation appliqué sur le signal vidéo 205 étant choisi en fonction du niveau de bruit estimé et de l'amplitude maximale du signal vidéo. Un but de cette normalisation est d'exprimer le signal vidéo sur une dynamique-constante.

Le signal vidéo normalisé 205' est ensuite transmis à un corrélateur 304 recevant en entrée un motif 306 à corréler avec le signal normalisé 205'. Ce motif pour le mode S prend la forme, par exemple, de deux impulsions carrées d'une durée de 0,8 $\mu$s séparées par une durée de 2 $\mu$s. Le pic de corrélation 310 est ensuite comparé 305 à un seuil fixe 307. Si le résultat de cette comparaison indique que le pic de corrélation 310 est en deçà du seuil 307, alors le signal vidéo 205 est considéré comme ne contenant pas le préambule recherché. Selon un autre mode de mise en oeuvre du procédé selon l'invention, le signal n'est pas normalisé et le niveau de seuil 307 est ajusté en fonction des niveaux de bruits estimés et/ou de l'amplitude maximale du signal vidéo 205.

La figure 4 illustre, par un graphique, la détection du préambule par les étapes sus décrites. Les impulsions 411, 412 détectées par le procédé selon l'invention et le niveau de bruit moyen estimé 413 sont représentés sur la figure 4.

Séquentiellement ou parallèlement au traitement du signal vidéo 205, le signal de phase 207 issu de la décomposition amplitude/phase est contrôlé.

La figure 5 illustre, à travers un synoptique, les étapes effectuées pour contrôler la phase du signal. Dans l'exemple où l'on recherche le préambule d'un message d'interrogation de mode S, les étapes de contrôle de phase permettent de vérifier que le signal radiofréquences 201 reçu (figure 2a) est, au niveau des impulsions 411, 412 du préambule, un sinus de fréquence 1030 MHz avec un écart de plus ou moins 10 kHz. La fréquence du signal de phase 207 en fréquence intermédiaire est par exemple de l'ordre de 60 MHz. Il est démodulé en deux composantes en bande de base : la composante I pour la partie réelle du signal de phase et la composante Q pour la partie imaginaire.

Plusieurs échantillons prélevés sur la composante I sont sommés pendant la durée de la première impulsion 411 et pendant la durée de la deuxième impulsion 412 du préambule précédemment détecté (cf. figures 3 et 4). Dans l'exemple, K échantillons 501 sont prélevés pendant l'écoulement de la première impulsion 411 et K échantillons 501' sont de nouveau prélevés pendant l'écoulement de la seconde impulsion 412. Les K premiers échantillons correspondant à la première impulsion 411 sont sommés avec les K échantillons correspondant à la seconde impulsion puis cette somme $S_I$ de 2K échantillons est normée 502. Si l'on devait représenter la phase du signal sur un cercle trigonométrique, les échantillons seraient prélevés sensiblement au même endroit sur ce cercle, dans l'exemple. Les symboles « $Z^{-1}$ » sur la figure représentent les retards égaux à la période d'échantillonnage. A titre d'exemple, la fréquence d'échantillonnage peut être égale à 20 MHz. On peut choisir toute autre fréquence d'échantillonnage, à condition que l'on puisse reconnaître, à partir de ces échantillons, les caractéristiques d'un signal de phase évoluant selon la sinusoïde attendue, autrement dit, distinguer un bruit thermique d'un signal sinusoïdal pur non modulé.

Un traitement analogue est effectué pour la composante Q, de sorte à obtenir la somme $S_Q$ de 2K échantillons prélevés sur la composante Q pendant l'écoulement des deux impulsions 411, 412.

Les sommes $S_I$, $S_Q$ sont ensuite normalisées et sommées 504 entre elles, et le résultat $C_\varphi$ de cette sommation 504 est ensuite comparé 506 à un seuil déterminé à partir, par exemple, de D échantillons prélevés en dehors des impulsions 411. La valeur $C_\varphi$ peut, par exemple, être exprimée comme suit :

$$C_\varphi(n) = \frac{1}{K^2} \left\{ \left| \sum_{j=0}^{K-1} I(n-j) + \sum_{j=0}^{K-1} I(n-K-D-j) \right|^2 + \left| \sum_{j=0}^{K-1} Q(n-j) + \sum_{j=0}^{K-1} Q(n-K-D-j) \right|^2 \right\}$$

où I(t) désigne un échantillon de la composante I à l'instant t, Q(t) désignant un échantillon de la composante Q à l'instant t.

Si à la suite du contrôle de phase 250, il s'avère qu'un préambule de message de mode S a bien été détecté, alors la phase de décodage des données (cinquième étape 215 dans les figures 2a et 2b) peut débuter. Les données sont transmises sous la forme d'une impulsion longue notée P6 et modulée en DPSK. Le début de cette impulsion longue P6 est marqué par une inversion de phase de synchronisation, puis les éléments de données (les bits) sont transmis successivement, chacun de ces bits, dans l'exemple, étant d'une durée de 0,25 μs. Les bits de données « 1 » sont indiqués par une inversion de phase tandis que les bits de données « 0 » sont marqués par un maintien de la phase du signal.

Contrairement à un procédé classique dans lequel l'inversion de phase de synchronisation est détectée isolément, le procédé selon l'invention permet de fiabiliser et de rendre plus précis la localisation du bloc de données dans le signal en corrélant une séquence de référence longue avec le signal en fréquence complexe (I,Q). Plus précisément, un message de mode S comprend au début un champ identifiant le format utilisé pour la communication. Pour les messages d'interrogation, ce champ de données est qualifié par « UF » signifiant « Uplink Format » et est codé sur 5 bits. Or le format utilisé pour l'interrogation est connu à l'avance, ce qui permet de corréler une séquence de référence comportant au moins l'inversion de phase de synchronisation et les bits du champ UF. La recherche d'une séquence de référence plus longue dans le signal permet notamment de localiser dans le signal le début de l'impulsion P6 de données avec une plus grande précision. En outre, si d'autres bits de données sont connus, alors ceux-ci peuvent être inclus dans la séquence de corrélation, de manière à allonger la séquence et par conséquent à fiabiliser encore davantage le procédé. Les bits de la séquence de corrélation ne sont pas nécessairement tous consécutifs. Le critère de corrélation $C^K$ peut, par exemple, être exprimé comme suit :

$$C^K(n) = \max_K \left\{ \frac{\sum_{i=0}^{L-1} x(K(n-i)) * d(i)}{\left( \sum_{i=0}^{L-1} |x(K(n-i))|^2 * \sum_{i=0}^{L-1} |d(i)|^2 \right)^{1/2}} \right\}$$

où x(n) représente un échantillon du signal, d(n) représentant un échantillon de la séquence de corrélation et L la longueur de la séquence de corrélation. Enfin, le niveau du pic de corrélation obtenu à l'issue de cette étape de corrélation avec une séquence de référence peut également constituer un indice de fiabilité de la détection du message de mode S.

Le procédé selon l'invention peut être mis en oeuvre dans un composant programmable, par exemple un FPGA, sigle anglo-saxon signifiant « Field-Programmable Gate Array ». Avantageusement, un FPGA déjà présent dans un répondeur peut être reprogrammé pour exécuter les étapes du procédé selon l'invention, aucune modification matérielle n'étant alors à effectuer pour mettre en oeuvre l'invention. Le procédé selon l'invention peut être mis en oeuvre dans un système déjà en place sans modifier les chaînes de réception analogiques déjà présentes dans ce système, et donc sans altérer leur facteur de bruit.

Le procédé selon l'invention permet d'obtenir, pour une détection effectué à distance équivalente, un gain de puissance de l'ordre de 6 dB par rapport à la puissance obtenue avec les procédés classiques. Autrement dit, à puissance équivalente, le procédé selon l'invention permet de décoder des messages à une distance maximale approximativement doublée par rapport à celle obtenue avec les procédés classiques.

Le procédé selon l'invention peut notamment être mis en oeuvre dans des terminaux à bord d'un aéronef, pour pouvoir interroger (en mode inversé) les terminaux au sol à partir de cet aéronef. En l'espèce, une antenne omnidirectionnelle est utilisée en émission par les terminaux au sol et une autre antenne omnidirectionnelle est utilisée en réception depuis l'aéronef, ce qui conduit au niveau des terminaux récepteurs, à recevoir des signaux de faible puissance risquant d'affecter le bilan de liaison. Grâce au procédé selon l'invention, les terminaux sont aptes, malgré ces faibles puissances reçues, à décoder les messages d'interrogation portés par lesdits signaux. Le procédé selon l'invention peut, par exemple, être mis en oeuvre dans des répondeurs IFF, sigle anglo-saxon pour « Identification Friend or Foe ».

Un avantage du procédé selon l'invention est qu'il peut être mis en oeuvre sans modifier l'architecture matérielle des interrogateurs et répondeurs, lorsque ceux-ci sont conçus à partir de composants programmables ou de modules logiciels.

**Revendications**

1. Procédé de détection d'un message pourvu d'un préambule à plusieurs impulsions dans un signal radiofréquences (201) émis par un interrogateur ou un répondeur en mode S, ledit procédé exécutant une étape de décomposition dudit signal (201) en un signal d'amplitude (205) et en un signal de phase complexe (207), ledit procédé exécutant une étape de détection (240) dudit préambule en corrélant le signal d'amplitude (205) avec un signal de réplique (306) des impulsions attendues, ledit procédé étant **caractérisé en ce qu'**il exécute une étape de contrôle de phase (250) permettant de déterminer si l'évolution de la phase du signal radiofréquences (201) est cohérente avec celle qui est attendue pour un préambule de message en mode S en sommant des échantillons dudit signal (207) de phase pendant la durée d'écoulement des impulsions (411, 412) dudit préambule et en exploitant les échantillons, de manière à déterminer si le signal de phase est un signal sinusoïdal.

2. Procédé selon la revendication 1, le préambule du message étant suivi par un bloc de données codées par modulation de phase différentielle, le procédé étant **caractérisé en ce qu'**il comprend une étape de synchronisation temporelle par corrélation du signal de phase complexe (207) avec une séquence de référence formée par un ou plusieurs bits connus avant le décodage des données.

3. Procédé selon la revendication 2, **caractérisé en ce que** la séquence de référence comprend au moins un bit d'inversion de phase et cinq bits identifiant le format du message de mode S.

4. Procédé selon la revendication 2 ou 3, **caractérisé en ce que** la séquence de référence comprend des bits de données non consécutifs.

5. Procédé selon l'une quelconque des revendications précédentes, **caractérisé en ce que** l'étape de contrôle de phase (250) vérifie que la phase du signal reçu varie selon une sinusoïde en démodulant le signal de phase complexe en une composante réelle I et une composante imaginaire Q puis en comparant (506) avec un seuil la somme (504) de plusieurs échantillons (501, 501') prélevés pendant les impulsions (411, 412) sur chacune des composantes I, Q.

6. Procédé selon l'une quelconque des revendications précédentes, le message étant un message d'interrogation en mode S, le procédé étant **caractérisé en ce que** le signal de réplique (306) corrélé avec le signal d'amplitude (205) comprend deux impulsions, chacune de durée égale à 0,8 $\mu$s, lesdites impulsions étant espacées temporellement par une durée de 2 $\mu$s.

7. Procédé selon l'une quelconque des revendications précédentes, le message étant un message de réponse en mode S, le procédé étant **caractérisé en ce que** le signal de réplique (306) corrélé avec le signal d'amplitude (205) comprend quatre impulsions, chacune de durée égale à 0,5 $\mu$s.

8. Procédé selon l'une des revendications précédentes, **caractérisé en ce que** l'étape de contrôle de phase (250) n'est exécutée que si un préambule a été observé lors de l'étape de détection (240) du préambule.

9. Procédé selon l'une quelconque des revendications précédentes, **caractérisé en ce que** le niveau de seuil (307) pour la détection du préambule est déterminé en fonction du niveau de bruit du signal et/ou de l'amplitude maximale du signal d'amplitude (205).

10. Répondeur comportant au moins une antenne (200a) et un module frontal radiofréquences (200b), **caractérisé en ce qu'**il comporte une unité de traitement (270) de mise en oeuvre du procédé selon l'une des revendications précédentes.

**Patentansprüche**

1. Verfahren zum Detektieren einer Nachricht, die mit einer Präambel in mehreren Impulsen in einem von einem Interrogator oder einem Transponder im S-Modus ausgestrahlten Funkfrequenzsignal (201) versehen ist, wobei das Verfahren einen Schritt des Spaltens des Signals (201) in ein Amplitudensignal (205) und ein Komplexphasensignal (207) ausführt, wobei das Verfahren einen Schritt (240) des Detektierens der Präambel durch Korrelieren des Amplitudensignals (205) mit einem Nachbildungssignal (306) der erwarteten Impulse beinhaltet, wobei das Verfahren **dadurch gekennzeichnet ist, dass** es einen Phasenregelschritt (250) ausführt, mit dem ermittelt werden kann, ob die Entwicklung der Phase des Funkfrequenzsignals (201) mit derjenigen kohärent ist, die für eine Nachrichtenpräambel im S-Modus erwartet wird, durch Addieren der Samples des Phasensignals (207) während der Dauer des Ablaufs der Impulse (411, 412) der Präambel und durch Nutzen der Samples, um zu ermitteln, ob das Phasensignal ein sinusförmiges Signal ist.

2. Verfahren nach Anspruch 1, wobei auf die Präambel der Nachricht ein Block von Daten folgt, die durch differentielle Phasenmodulation codiert wurden, wobei das Verfahren **dadurch gekennzeichnet ist, dass** es einen Zeitsynchronisationsschritt durch Korrelieren des Komplexphasensignals (207) mit einer Referenzsequenz beinhaltet, die durch ein oder mehrere vor dem Decodieren der Daten bekannte Bits gebildet wird.

3. Verfahren nach Anspruch 2, **dadurch gekennzeichnet, dass** die Referenzsequenz wenigstens ein Phasenumkehrbit und fünf Bits umfasst, die das Format der S-Modus-Nachricht identifizieren.

4. Verfahren nach Anspruch 2 oder 3, **dadurch gekennzeichnet, dass** die Referenzsequenz nicht-konsekutive Datenbits umfasst.

5. Verfahren nach einem der vorherigen Ansprüche, **dadurch gekennzeichnet, dass** in dem Phasenregelschritt (250) geprüft wird, ob die Phase des empfangenen Signals sinusförmig variiert, durch Demodulieren des Komplexphasensignals in eine Realkomponente I und eine Imaginärkomponente Q und dann Vergleichen (506) mit der Summe (504) von mehreren Samples (501, 510'), die während der Impulse (411, 412) an jeder der Komponenten I, Q genommen wurden, mit einem Schwellenwert.

6. Verfahren nach einem der vorherigen Ansprüche, wobei die Nachricht eine Abfragenachricht im S-Modus ist, wobei das Verfahren **dadurch gekennzeichnet ist, dass** das mit dem Amplitudensignal (205) korrelierte Nachbildungssignal (306) zwei Impulse umfasst, jeweils mit einer Dauer von gleich 0,8 $\mu$s, wobei die Impulse zeitlich durch eine Dauer von 2 $\mu$s beabstandet sind.

7. Verfahren nach einem der vorherigen Ansprüche, wobei die Nachricht eine Antwortnachricht im S-Modus ist, wobei das Verfahren **dadurch gekennzeichnet ist, dass** das mit dem Amplitudensignal (205) korrelierte Nachbildungssignal (306) vier Impulse umfasst, jeweils mit einer Dauer von gleich 0,5 $\mu$s.

8. Verfahren nach einem der vorherigen Ansprüche, **dadurch gekennzeichnet, dass** der Phasenregelschritt (250) nur dann ausgeführt wird, wenn eine Präambel während des Schrittes des Detektierens (240) der Präambel beobachtet wurde.

9. Verfahren nach einem der vorherigen Ansprüche, **dadurch gekennzeichnet, dass** der Schwellenpegel (307) für die Detektion der Präambel in Abhängigkeit vom Rauschpegel des Signals und/oder der maximalen Amplitude des Amplitudensignals (205) ermittelt wird.

10. Transponder, der wenigstens eine Antenne (200a) und ein Funkfrequenz-Frontend-Modul (200b) umfasst, **dadurch gekennzeichnet, dass** er eine Verarbeitungseinheit (270) zum Ausführen des Verfahrens nach einem der vorherigen Ansprüche umfasst.

## Claims

1. A method for detecting a message having a preamble at a plurality of pulses in a radiofrequency signal (201) transmitted by an interrogator or a transponder in mode S, said method executing a step of decomposing said signal (201) into an amplitude signal (205) and into a complex phase signal (207), said method executing a step (240) of detecting said preamble by correlating said amplitude signal (205) with a replica signal (306) of the expected pulses, said method being **characterised in that** a phase control step (250) is executed for determining whether the evolution of the phase of said radiofrequency signal (201) is consistent with that which is expected for a message preamble in mode S, by adding samples of said phase signal (207) for the duration of flow of the pulses (411, 412) of said preamble and by using the samples in order to determine whether the phase signal is a sinusoidal signal.

2. The method according to claim 1, with the preamble of the message being followed by a block of data coded by differential phase modulation, said method being **characterised in that** it comprises a step of time synchronisation by correlating said complex phase signal (207) with a reference sequence formed by one or more known bits before the decoding of the data.

3. The method according to claim 2, **characterised in that** said reference sequence comprises at least one phase inversion bit and five bits identifying the format of the mode S message.

4. The method according to claim 2 or 3, **characterised in that** said reference sequence comprises non-consecutive data bits.

5. The method according to any one of the preceding claims, **characterised in that** said phase control step (250) verifies that the phase of the received signal varies according to a sinusoid by demodulating said complex phase signal into a real component I and an imaginary component Q, then by comparing (506) with the sum (504) of a plurality of samples (501, 501'), taken during the pulses (411, 412) on each of the components I, Q, with a threshold.

6. The method according to any one of the preceding claims, with the message being an interrogation message in mode S, said method being **characterised in that** said replica signal (306) correlated with said amplitude signal (205) comprises two pulses, each having a duration equal to 0.8 $\mu$s, said pulses being separated in time by a duration of 2 $\mu$s.

7. The method according to any one of the preceding claims, with said message being a reply message in mode S, said method being **characterised in that** said replica signal (306) correlated with said amplitude signal (205) comprises four pulses, each having a duration equal to 0.5 $\mu$s.

8. The method according to one of the preceding claims, **characterised in that** said phase control step (250) is only executed if a preamble has been observed during the step of detecting (240) the preamble.

9. The method according to any one of the preceding claims, **characterised in that** said threshold level (307) for detecting the preamble is determined as a function of the noise level of the signal and/or of the maximum amplitude of said amplitude signal (205).

10. A transponder comprising at least one antenna (200a) and one radiofrequency front-end module (200b), **characterised in that** it comprises a processing unit (270) for implementing the method according to any one of the preceding claims.

**FIG.1a**

**FIG.1b**

FIG.2a

FIG.2b

FIG.3

411
412

6
4
2
0
-2
-4
-6
-8

413

## FIG.4

411
412

K
D
K

I

501
501'

502
504
506

Q

## FIG.5

**EP 2 438 461 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 5089822 A